(19) Europäisches Patentamt
European Patent Office
Office européen des brevets

(11) **EP 2 221 992 A1**

(12) **EUROPEAN PATENT APPLICATION**

(43) Date of publication:
**25.08.2010 Bulletin 2010/34**

(51) Int Cl.:
***H04B 7/06*** (2006.01)  ***H04B 7/08*** (2006.01)

(21) Application number: **09160177.3**

(22) Date of filing: **13.05.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(30) Priority: **19.02.2009 US 153808 P**<br><br>(71) Applicants:<br>• **IMEC**<br>  **3001 Leuven (BE)** | • **Katholieke Universiteit Leuven, K.U. Leuven R&D**<br>  **3000 Leuven (BE)**<br><br>(72) Inventor: **Nsenga, Jimmy**<br>  **3001, Leuven (BE)**<br><br>(74) Representative: **BiiP cvba**<br>  **Gaston Crommenlaan 10 b101**<br>  **9050 Ledeberg (Ghent) (BE)** |

(54) **Method and system for analog beamforming in wireless communication systems**

(57) The present invention is related to a method of analog beamforming in a wireless communication system, whereby said system has a plurality of transmit antennas and receive antennas. The method comprises the steps of determining transmit beamforming coefficients and receive beamforming coefficients by :
- determining information representative of communication channels formed between a transmit antenna and a receive antenna of the plurality of antennas,

- defining a set of coefficients representing jointly the transmit and the receive beamforming coefficients,
- determining a beamforming cost function using the information and the set of coefficients,
- determining an optimized set of coefficients by exploiting the beamforming cost function,
- separating the optimized set of coefficients into optimized transmit beamforming coefficients and optimized receive beamforming coefficients.

**Fig.1**

EP 2 221 992 A1

**Description**

**Field of the Invention**

The present invention generally relates to wireless networks and in particular to beamforming transmissions in wireless networks.

**Background of the Invention**

The huge bandwidth available in the 60 GHz band allows short-range wireless communications to deliver data rate beyond 1 Gbps. However, the high pathloss and low output power of CMOS Power Amplifiers (PA) at 60 GHz yields poor link budget, making impossible to support such high data rate with omnidirectional antenna. A key solution to the link budget problem at 60 GHz is to use multiple antenna beamforming.

Currently, most of the existing joint Transmit/Receive (Tx/Rx) BF designs for MIMO frequency selective channels use wideband (i.e. frequency-selective) Tx and Rx weights. Depending on the beamforming architecture, the weighting can be done either in the digital domain (Digital BeamForming (DBF)) or in the analog domain (Analog BeamForming (ABF)) using Finite Impulse Response (FIR) filter weights. However, the power consumption of a DBF architecture is very high, since each antenna branch has its own complete up (or down)-conversion chain including a Digital-to-Analog Converter (DAC) (or an Analog-to-Digital Converter (ADC)). On the other hand, even though a FIR ABF architecture has only one Tx/Rx chain shared by different antennas, the analog implementation of FIR filter weights is very complex. Consequently, these two architectures are not suited for end-user 60 GHz wireless terminals.

To alleviate both high power consumption and high implementation complexity problems, a key solution is to use ABF architectures with scalar (i.e. frequency-flat) complex weights. However, the design of corresponding joint Tx/Rx ABF algorithms is challenging in the case of frequency selective channels due to this constraint of a scalar weight per antenna.

A typical optimization problem is formulated by $(\underline{w}_{opt}, \underline{c}_{opt}) = arg\max_{\underline{w}, \underline{c}} \dfrac{\underline{c}^H \underline{\underline{P}}_{(w)} \underline{c}}{\underline{c}^H \underline{c}}$, with $\underline{w}_{opt}$ the optimal transmit weight vector and $\underline{c}_{opt}$ the optimal receive weight vector and $\underline{\underline{P}}_{(w)}$ defined by

$$\underline{\underline{P}}_{(w)} = \sum_l \underline{\underline{H}}[l] \, \underline{w} \, \underline{w}^H \underline{\underline{H}}^H[l]$$ (with H the overall channel response and $\underline{w}$ a vector of transmit beamforming coefficients). While the computation of $\underline{c}_{opt}$ is straightforward, the computation of $\underline{w}_{opt}$ is a non-linear optimization problem. Note that for flat MIMO channels the optimization problem can be simplified since $\underline{\underline{P}}_{(w)}$ is a rank one matrix. In that case, the largest eigenvalue optimization problem is equivalent to maximizing the trace of $\underline{\underline{P}}_{(w)}$. However, in the case of MIMO multipath channels, $\underline{\underline{P}}_{(w)}$ is not a rank one matrix. Consequently, the maximum eigenvalue optimization problem cannot be solved directly via the optimization problem of the trace.

An iterative joint Tx/Rx ABF algorithm that takes this constraint into account is proposed in '*MIMO beamforming for high bit rate transmission over frequency selective channels*', (H. Hoang Pham et al., IEEE Eighth Int'l Symposium on Spread Spectrum Techniques and Applications, pp. 275-279, 2004). The Tx and Rx weights are computed to maximize the Signal to Noise Ratio (SNR), where the energy in the delayed paths is treated as additional noise. Nevertheless, this ABF optimization approach is sub-optimal if an equalizer is to be used afterwards. Moreover, this approach requires a complete knowledge of all Tx/Rx Channel Impulse Response (CIR) pairs of the MIMO channel at both Tx and Rx sides. The acquisition of this information in real-time operation is costly for large delay spread channels.

In US patent application US 2008/0204319, an iterative beam acquisition process based on beam search training is performed, thereby determining transmit and receive beamforming vectors including phase weighting coefficients. Each iteration involves estimating receive and transmit beamforming coefficients alternatively, until the receive and transmit beamforming coefficients converge. This optimization process can converge to a local minimum.

**Aims of the invention**

The present invention aims to provide a method of analog beamforming in a wireless communication system wherein the need for solving a non-linear problem for determining the transmit and receive beamforming coefficients is avoided.

## Summary

The present invention presents a method of analog beamforming in a wireless communication system having a plurality of transmit antennas and receive antennas. The method comprises the step of determining transmit beamforming coefficients and receive beamforming coefficients by: a) determining information representative of communication channels formed between a transmit antenna and a receive antenna of the plurality of antennas, b) defining a set of coefficients representing jointly the transmit and receive beamforming coefficients, c) determining a beamforming cost function by using this information and the set of coefficients, d) calculating an optimized set of coefficients by exploiting this beamforming cost function, e) separating the optimized set of coefficients into optimized transmit beamforming coefficients and optimized receive beamforming coefficients.

In a preferred embodiment the step of determining information representative of communication channels comprises determining a channel pair matrix having elements representative of channel pairs formed between a transmit antenna and a receive antenna of the plurality of antennas. In particular, this matrix comprises the inner products between a channel pair. Furthermore, the step of determining an initial set of coefficients representing the transmit and receive beamforming coefficients comprises defining a joint transmit and receive vector, defined by $\underline{d}^H = \underline{w}^T \otimes \underline{c}^H$. The step of separating the optimized set of coefficients is performed by a vector decomposition.

Further, a beamforming cost function is determined by means of this channel pair matrix and the joint transmit and receive vector. The cost function is optimized and thereby the optimized joint transmit and receive vector is determined. This optimized joint transmit and receive vector is preferably determined by calculating the principal eigenvector of the channel pair matrix e.g. via eigenvalue decomposition (EVD) of the channel pair matrix. The optimized joint transmit and receive vector is separated into a transmit beamforming vector and a receive beamforming vector by a vector decomposition of the optimized joint transmit and receive vector e.g. Schmidt decomposition.

By optimizing a joint analog beamforming coefficient, a non-linear optimization problem is avoided. The present invention provides a method for joint TX/RX ABF optimization, where the energy in the delayed paths is exploited to increase the average symbol energy at the input of the equalizer. The required channel pair matrix or the Channel State Information (CSI) for joint TX/RX ABF optimization is only the inner products between all Tx/Rx pairs. The amount of CSI to be estimated in real-time depends only on the number of TX and Rx antennas and not on the time dispersion due to the channel.

In another embodiment the method of analog beamforming in a wireless communication system further comprises the steps of a) selecting a set of coefficients representing predetermined transmit and receive beamforming coefficients for each of a required number of antenna training periods, b) transmitting a periodic training sequence with a predetermined coefficient in that number of antenna training periods, whereby the predetermined coefficient is selected from the set of coefficients, c) receiving the transmitted training sequences, d) determining dependency relations between the received training sequences at each of the antenna training periods and e) determining an estimate of the information representative of communication channels by means of the dependency relations and the set of coefficients.

In particular, the number of antenna training periods is defined by the multiplication of the number of transmit antennas and the number of receive antennas, $n_T \times n_R$. They are organized in a covariance matrix comprising the covariance between the received training sequences at each of the antenna training periods. Preferably, also the set of coefficients is organized in a joint matrix comprising columns of a joint transmit and receive vector used in the antenna training periods. Furthermore, this joint matrix is a unitary matrix.

The channel pair matrix is estimated by means of the covariance matrix and the joint transmit and receive matrix. For a large time dispersion channel $(L > \dfrac{n_R \times n_T + 1}{2})$, the complexity of estimating this channel pair matrix is independent of the channel time dispersion because if one had to estimate each individual channel pair instead of the inner products between them, then the number of elements to be estimated would be $n_R \times n_T \times L$. Thus for large time dispersive channels, the lower complexity solution is to estimate the inner products.

## Brief Description of the Drawings

The invention will be further elucidated by means of the following description and the appended figures.

Fig. 1 illustrates a MIMO transceiver system.

Fig. 2 represents a flowchart for retrieving transmit and receive weights.

Fig. 3 represents a plot of the BER as function of the input SNR.

Fig. 4 illustrates the performance of the proposed CSI estimator.

**Detailed Description of the Invention**

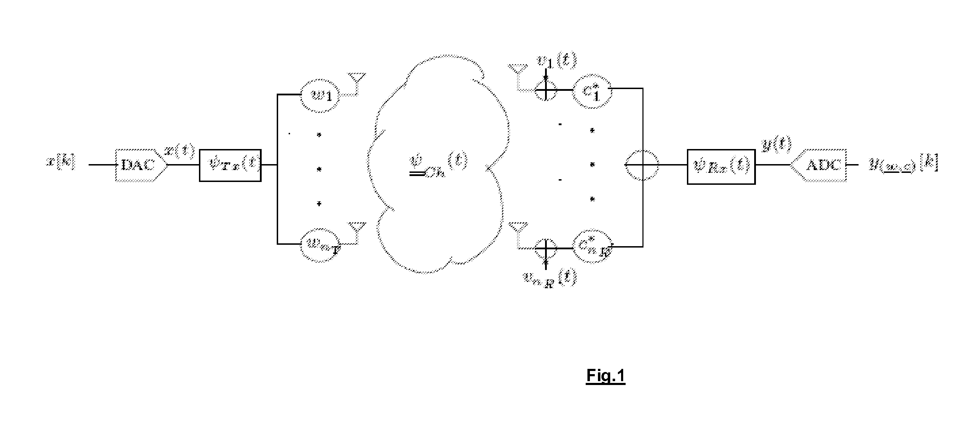

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.
Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.
Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.
The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting of only components A and B. It means that with respect to the present invention, the only relevant components of the device are A and B.
The present invention provides a method of analog beamforming in a wireless communication system having a plurality of transmit antennas and receive antennas. A channel pair is formed between a transmit antenna and a receive antenna of this plurality of antennas. The method comprises determining a beamforming cost function by means of a matrix representing the communication channel and a joint transmit and receive vector. Via an optimization technique, this joint transmit and receive vector may be derived. Further, this optimized joint transmit and receive vector will be separated into a transmit beamforming vector and a receive beamforming vector via a vector decomposition.
In the description, following notations are used. Roman letters represent scalars, single underlined letters denote column vectors and double underlined letters represent matrices. The notations $[.]^T$, $[.]^H$ and $[.]^*$ stand for transpose, complex conjugate transpose and conjugate transpose operators, respectively. The expectation operator is denoted by $\varepsilon[.]$. The symbol $\otimes$ denotes the Kronecker product. The element of X in k-th row and l-th column is represented by $[\underline{X}]_{(k,l)}$. The notation $\underline{I}_k$ represents the identity matrix of size k x k.
First a system model is introduced. A multi-antenna wireless system is considered with $n_T$ transmit antennas and $n_R$ receive antennas. Both the Tx and Rx Front-Ends (FE) are based on an ABF architecture as shown in Fig.1. In this system configuration only one digital stream $x[k]$ can be transmitted. In the following, the expression of the discrete-time Channel Impulse Response (CIR) as a function of Tx/Rx scalar weights is derived. From the Tx DAC to the Rx ADC, one has successively: a Tx pulse shaping filter $\psi_{Tx}(t)$, a splitter, $n_T$ Tx scalar weights $\underline{w}:=[w_1\ w_2...w_{n_T}]^T$, a wireless frequency selective MIMO channel $\underline{\psi}_{Ch}(t)$, $n_R$ Rx scalar weights $\underline{c}^H := \left[ c_1^*\ c_2^*\ ... c_{n_R}^* \right]$, a combiner and finally a Rx pulse shaping filter $\psi_{Rx}(t)$. The overall MIMO channel response of the cascade of the Tx filter, the continuous MIMO channel and the Rx filter is denoted $\underline{H}(t):=\psi_{Tx}(t)^*\psi_{Ch}(t)^*\psi_{Rx}(t)$. Since the symbol rate is very high, it is assumed in the sequel that the channel conditions stay invariant during the transmission of several bursts. The equivalent discrete-time expression of the MIMO channel, defined as $\underline{\widetilde{H}}[k]:= \underline{\widetilde{H}}(t)|_{t=kT}$ is given by:

$$\underline{\widetilde{H}}[k] = \sum_{l=0}^{L-1} \underline{H}[l]\, \delta[k-l], \tag{1}$$

where $L$ denotes the number of discrete-time multipath components and the matrix $\underline{H}[l]$ represents the MIMO channel response after a time delay equal to $l$ symbol periods. The latter matrix is defined as:

$$\underline{\underline{H}}[l] = \begin{bmatrix} h_{1,1}[l] & h_{1,2}[l] & & h_{1,n_T}[l] \\ h_{2,1}[l] & h_{2,2}[l] & & h_{2,n_T}[l] \\ \vdots & \vdots & \ddots & \vdots \\ h_{n_R,1}[l] & h_{n_R,2}[l] & & h_{n_R,n_T}[l] \end{bmatrix},$$ (2)

where $h_{i,j}[l]$ is the complex gain of the $l^{th}$ tap of the aggregate CIR between the $i^{th}$ receive antenna and the $j^{th}$ transmit antenna.

Taking into account the Tx and Rx scalar weights, the discrete-time Single Input Single Output (SISO) CIR is given by:

$$\widetilde{h}_{(\underline{w},\underline{c})}[k] = \underline{c}^H \left( \sum_{l=0}^{L-1} \underline{\underline{H}}[l] \, \delta[k-l] \right) \underline{w}.$$ (3)

Furthermore, each receiver branch is corrupted by Additive White Gaussian Noise (AWGN) of variance $\sigma_v^2$. Since the AWGN on different Rx antennas are mutually independent, it can be shown that the variance of the resulting AWGN after Rx combining, denoted $n_{(\underline{c})}(t)$, is given by:

$$\sigma_{n_{(\underline{c})}}^2 = \sigma_v^2 \, \underline{c}^H \, \underline{c}.$$ (4)

Finally, the discrete-time input-output relationship is given by

$$y_{(\underline{w},\underline{c})}[k] = \underline{c}^H \left( \sum_{l=0}^{L-1} \underline{\underline{H}}[l] \, x[k-l] \right) \underline{w} + n_{(\underline{c})}[k].$$ (5)

The key challenge in finding optimal weights $\underline{w}$ and $\underline{c}$ is that, being scalar, they are identical for all multipath delays $l$ in (5).

In a first step a joint transmit and receive vector is determined based on maximising the average SNR at the input of an equalizer. Firstly, a BF cost function is defined based on the average SNR criterion, where the energy in the delayed paths is exploited to increase the symbol energy at the input of the equalizer. Secondly, the ABF optimization problem is stated. Finally, a low complexity algorithm is proposed to compute close-to-optimal Tx/Rx scalar weights according to this criterion.

Beamforming Cost Function

The considered SNR metric is denoted by $\overline{\Gamma}_{(\underline{w},\underline{c})}$, which is a function of both Tx and Rx weights. Starting from (5) and assuming a zero-mean independent and identically distributed (i.i.d) sequence $x[k]$ with variance $\sigma_x^2$, the calculation of $\overline{\Gamma}_{(\underline{w},\underline{c})}$ is given by

$$\overline{\Gamma}_{(\underline{w},\underline{c})} = \overline{\Gamma}_0 \frac{\sum_{l=0}^{L-1} |\underline{c}^H \underline{\underline{H}}[l] \underline{w}|^2}{\underline{c}^H \underline{c}} \tag{6}$$

where $\overline{\Gamma}_0 = \dfrac{\sigma_x^2}{\sigma_v^2}$ is the average input SNR.

In the numerator of (6) the energy of *all* taps of the multipath is considered. In the sequel, the resulting optimization problem is described.

Optimization Problem Statement

The beamforming cost function expression (6) is rewritten as

$$\overline{\Gamma}_{(\underline{w},\underline{c})} = \overline{\Gamma}_0 \frac{\underline{c}^H \underline{\underline{P}}_{(w)} \underline{c}}{\underline{c}^H \underline{c}}, \tag{7}$$

where

$$\underline{\underline{P}}_{(w)} = \sum_l \underline{\underline{H}}[l] \underline{w} \underline{w}^H \underline{\underline{H}}^H[l]. \tag{8}$$

The resulting optimization problem is formulated as

$$(\underline{w}_{opt}, \underline{c}_{opt}) = arg \max_{w,c} \frac{\underline{c}^H \underline{\underline{P}}_{(w)} \underline{c}}{\underline{c}^H \underline{c}}. \tag{9}$$

In order to keep the total transmitted power constant, the norm of $\underline{w}$ is constrained to unity. Moreover, to retain the average SNR calculations to the input SNR, the Rx weight vector $\underline{c}$ is normalized such that: $\underline{c}^H\underline{c}=1$.
It is known that for a given $\underline{w}$ the vector that maximizes (7), denoted by $\underline{c}_{opt}(\underline{w})$, corresponds to the principal eigenvector of $\underline{\underline{P}}_{(\underline{w})}$ and $\overline{\Gamma}_{(\underline{w},\underline{c}_{opt}(\underline{w}))}$ equals the largest eigenvalue of $\underline{\underline{P}}_{(\underline{w})}$. Hence, the joint Tx/Rx ABF optimization problem can be solved as follows.

• Find the Tx weight $\underline{w}$ that maximizes the largest eigenvalue of $\underline{\underline{P}}_{(\underline{w})}$, denoted by $\underline{w}_{opt}$

$$\underline{w}_{opt} = arg \max_{\underline{w}} \lambda_{\max}(\underline{\underline{P}}_{(\underline{w})}). \tag{10}$$

• Next, from the Eigen Value Decomposition (EVD) of $\underline{\underline{P}}_{(\underline{w}opt)}$, the optimal Rx weight $\underline{c}_{opt}$ is chosen to be the principal eigenvector of $\underline{\underline{P}}_{(\underline{w}opt)}$.

While the computation of $\underline{c}_{opt}$ is straightforward, the computation of $\underline{w}_{opt}$ is a non-linear optimization problem. Note that for flat MIMO channels the optimization problem can be simplified since $\underline{\underline{P}}_{(\underline{w})}$ is a rank one matrix. In that case the largest eigenvalue optimization problem is equivalent to maximizing the trace of $\underline{P}_{(w)}$. It can be easily shown that $\underline{w}_{opt}$ is then the principal eigenvector of $\underline{H}^H[0]\underline{H}[0]$. However, in the case of MIMO multipath channels, $\underline{P}_{(w)}$ is not a rank one matrix because of the summation in (8). Consequently, the maximum eigenvalue optimization problem cannot be solved directly via the optimization problem of the trace.

Proposed joint Tx/Rx ABF optimization algorithm

First the expression (6) is reformulated. A so called vec operator is hereby introduced. Such operator is well known in the field of linear algebra and creates a column vector from a matrix $A$ by stacking the column vectors of $A = [a_1 \, a_2 \, ... \, a_n]$ below one another:

$$vec(A) = \begin{bmatrix} a_1 \\ a_2 \\ \vdots \\ a_n \end{bmatrix}$$

By exploiting the vec operator property $vec(AxB) = (B^T \otimes A) \, vec(X)$, the scalar term $\underline{c}^H\underline{H}[l]\underline{w}$ from (6) can be rewritten as:

$$\underline{c}^H \underline{H}[l] \, \underline{w} = (\underline{w}^T \otimes \underline{c}^H) vec(\underline{H}[l]). \qquad (11)$$

Substituting (11) into (6), one obtains:

$$\overline{\Gamma}_{(\underline{w},\underline{c})} = \overline{\Gamma}_0 \, (\underline{w}^T \otimes \underline{c}^H)\underline{\underline{R}}(\underline{w}^T \otimes \underline{c}^H)^H \qquad (12)$$

where

$$\underline{\underline{R}} = \sum_{l=0}^{L-1} vec(\underline{H}[l])[vec(\underline{H}[l])]^H \qquad (13)$$

It is shown below that the elements of $\underline{\underline{R}}$ are inner products between MIMO CIR pairs. This matrix has a Hermitian structure and has a rank $R = \min\{L, n_R \times n_T\}$. A composite vector $\underline{d}$ is defined as

$$\underline{d}^H = \underline{w}^T \otimes \underline{c}^H. \qquad (14)$$

The vector $\underline{d}$ has $N_R \times N_T$ elements. Then the expression of the SNR gets a classical quadratic form

$$\overline{\Gamma}_{(\underline{d})} = \overline{\Gamma}_0 \ \underline{d}^H \underline{\underline{\mathcal{R}}} \ \underline{d} \tag{15}$$

The optimization of (15) is done by computing the EVD of $\underline{\underline{\mathcal{R}}}$

$$\underline{\underline{\mathcal{R}}} = \sum_{r=1}^{R} \lambda_r \underline{q}_r \underline{q}_r^H \tag{16}$$

where $\lambda_1 \geq \lambda_2 \geq \ \geq \lambda_R > 0$ are real-valued eigenvalues of $\underline{\underline{\mathcal{R}}}$ and $\underline{q}_1, \underline{q}_2, ., \underline{q}_R$ are the corresponding eigenvectors.

It is well known that the vector $\underline{d}$ that maximizes (15) corresponds to the principal eigenvector of $\underline{\underline{\mathcal{R}}}$. Therefore $\underline{d}_{opt} = \underline{q}_1$. In order to obtain separate Tx and Rx weight vectors, the vector $\underline{d}_{opt}$ must be expressed as a kronecker product of two vectors. In linear algebra, this is achieved by applying the Schmidt decomposition theory.
Let $G_T$ and $G_R$ be the Hilbert spaces of dimensions $N_T$ and $N_R$ respectively.
Denoting by $N = \min(N_R, N_T)$, for any vector $\underline{d}$ in the tensor product $G_T \otimes G_R$, there exists orthonormal sets $\{\underline{t}_1, .., \underline{t}_N\} \subset G_T$ and $\{\underline{r}_1, .., \underline{r}_N\} \subset G_R$ such that

$$\underline{d} = \sum_{i=1}^{N} \alpha_i \underline{t}_i \otimes \underline{r}_i. \tag{17}$$

The scalars $\alpha_i$, known as Schmidt coefficients, are non-negative and are such that $\alpha_1 > \alpha_2 > ... > \alpha_N > 0$. Since the number $N$ of Schmidt coefficients is > 1 the composite vector $\underline{d}$ is said to be entangled. A close-to-optimal solution is obtained by taking the best rank-1 approximation of the Schmidt decomposition of $\underline{d}_{opt}$ which yields $\underline{w}^T = \underline{t}_{1,opt}^H$ and $\underline{c} = \underline{r}_{1,opt}$.

In the second step the inner products between the MIMO CIR pairs needs to be estimated. From the previous section it is known that the required CSI to compute the optimal Tx and Rx ABF weights is contained in the matrix $\underline{\underline{\mathcal{R}}}$. The required CSI is now shown to be the inner product between channel impulse responses of all MIMO Tx/Rx pairs. Next, a method is proposed to acquire this CSI in real-time operation.

Required CSI

Each element of $\underline{\underline{\mathcal{R}}}$ is an inner product between a pair of MIMO CIR. In fact, substituting (2) in (14), one can easily show the element $[\underline{\underline{\mathcal{R}}}]_{(j_1, j_2)}$ is given by

$$[\underline{\underline{\mathcal{R}}}]_{(j_1, j_2)} = \sum_{l=0}^{L-1} h_{r_1, t_1}[l] h_{r_2, t_2}^{*}[l] \tag{18}$$

$$= \underline{h}^{H}_{r_2,t_2} \underline{h}_{r_1,t_1} \tag{19}$$

where

$$j_i = n_R(t_i - 1) + r_i \ with \begin{cases} i = \{1,2\} \\ t_i = \{1,2,..,n_T\} \\ r_i = \{1,2,..,n_R\} \end{cases}$$

and $\underline{h}_{r,t} := [h_{r,t}[0], h_{r,t}[1],..., h_{r,t}[L-1]]^T$ is the discrete-time CIR between the $r^{th}$ Rx antenna and $t^{th}$ Tx antenna.

Proposed CSI estimator

A method is now proposed to estimate the matrix $\underline{\underline{\mathcal{R}}}$ . Since this matrix is square and hermitian, the number of elements to be estimated is $\dfrac{(n_R \times n_T) \times (n_R \times n_T + 1)}{2}$ . If one had to estimate each individual MIMO CIR pair instead of the inner product between them, then the number of elements to be estimated would be $n_R \times n_T \times L$. Thus, for large time dispersive channels, where $L > \dfrac{n_R \times n_T + 1}{2}$ , the lower complexity solution is to estimate the inner products.

The proposed method is based on a repetitive transmission of a length-$K$ i.i.d and zero mean training sequence, which is denoted by $u[k]$ below. As set out below, the number of required training periods is $n_R \times n_T$. In each training period different joint Tx/Rx weights are used.

Starting from (5) and using the vec operator property, the $k^{th}$ symbol received during the $m^{th}$ training period is given by

$$y_m[k] = \underline{d}^{H}_m \sum_{l=0}^{L-1} vec(\underline{\underline{H}}[l])u[k-l] + n_{(\underline{c}_m)}[k], \tag{20}$$

where $\underline{d}_m$ is defined as in (15). The covariance between the symbols received in the $m^{th}_1$ and $m^{th}_2$ periods is

$$\sigma^2_y(m_1, m_2) = \mathcal{E}[y_{m_1}[k]y^*_{m_2}[k]] \tag{21}$$

Substituting (20) in (21), one obtains

$$\sigma_y^2(m_1, m_2) =$$

$$\underline{d}_{m_1}^H (\sum_{l_1=0}^{L-1}\sum_{l_2=0}^{L-1} vec(\underline{\underline{H}}[l_1])[vec(\underline{\underline{H}}[l_2])]^H)\underline{d}_{m_2}$$

$$\times \mathcal{E}[u[k - l_1]u^*[k - l_2]]$$

$$+\mathcal{E}[n_{(\underline{c}_{m_1})}[k]n^*_{(\underline{c}_{m_2})}[k]]$$

$$+\underline{d}_{m_1}^H (\sum_{l=0}^{L-1} vec(\underline{\underline{H}}[l])\mathcal{E}[n_{(\underline{c}_{m_1})}[k]u^*[k - l]])$$

$$+(\sum_{l=0}^{L-1}[vec(\underline{\underline{H}}[l])]^H \mathcal{E}[u[k - l]n^*_{(\underline{c}_{m_2})}[k]])\underline{d}_{m_2} \qquad (22)$$

By exploiting the i.i.d and zero-mean property of the training sequence $u[k]$

$$\mathcal{E}[u[k - l_1]u^*[k - l_2]] = \begin{cases} \sigma_u^2 & l_1 = l_2 \\ 0 & l_1 \neq l_2 \end{cases}$$

the i.i.d property of AWGN

$$\mathcal{E}[n_{(\underline{c}_{m_1})}[k]n^*_{(\underline{c}_{m_2})}[k]] = \begin{cases} \sigma_n^2 \ \delta(m_1 - m_2) \\ 0 \end{cases}$$

the mutual independence between i.i.d sequence $u[k]$ and AWGN

$$\left. \begin{array}{l} \mathcal{E}[u[k - l]n^*_{(\underline{c}_{m_2})}[k]] \\ \\ \mathcal{E}[n_{(\underline{c}_{m_1})}[k]u^*[k - l]] \end{array} \right\} = 0 \quad \forall l$$

one obtains

$$\sigma_y^2(m_1, m_2) = \sigma_u^2 \underline{d}_{m_1}^H \underline{\underline{R}} \ \underline{d}_{m_2} + \sigma_n^2 \delta(m_1 - m_2) \qquad (23)$$

In order to obtain the same number of equations as unknowns, $n_R \times n_T$ training periods are needed. Therefore, after

collecting the data durind all training periods, one can compute an $n_R \times n_T$ square matrix, denoted $\underline{\underline{\sigma}}_y^2$, such that $[\underline{\underline{\sigma}}_y^2]_{(m_1,m_2)} = \sigma_y^2(m_1, m_2)$ with $m_{1/2} = \{1,2,...,n_R \times n_T\}$. In matrix formulation, $\underline{\underline{\sigma}}_y^2$ is given by

$$\underline{\underline{\sigma}}_y^2 = \sigma_u^2 \underline{\underline{D}}^H \underline{\underline{\mathcal{R}}} \underline{\underline{D}} + \sigma_n^2 \underline{\underline{I}}_{n_R \times n_T} \qquad (24)$$

where the $m^{th}$ column of $\underline{D}$ is the used joint Tx/Rx weight vector $\underline{d}_m$ in the $m^{th}$ training period.
If the Tx/Rx weight vector $\underline{w}_m$ and $\underline{c}_m$ that yield $\underline{d}_m$ are selected such that the resulting $\underline{D}$ is a unitary matrix

$$\underline{\underline{D}}^H \underline{\underline{D}} = \underline{\underline{I}}_{n_T \times n_R}, \qquad (25)$$

an estimation of $\underline{\underline{\mathcal{R}}}$ is obtained by isolating in $\underline{\underline{\mathcal{R}}}$ in (24)

$$\underline{\underline{\hat{\mathcal{R}}}} = \underline{\underline{D}} \, \underline{\underline{\sigma}}_y^2 \, \underline{\underline{D}}^H \qquad (26)$$

$$= \sigma_u^2 \underline{\underline{\mathcal{R}}} + \sigma_n^2 \underline{\underline{I}}_{n_R \times n_T} \qquad (27)$$

Note that, in practice, each covariance element $[\underline{\underline{\sigma}}_y^2]_{(m_1,m_2)}$ is approximated by

$$[\underline{\underline{\sigma}}_y^2]_{(m_1,m_2)} \cong \frac{1}{K} \sum_{k=0}^{K-1} y_{m_1}[k] y_{m_2}^*[k]. \qquad (28)$$

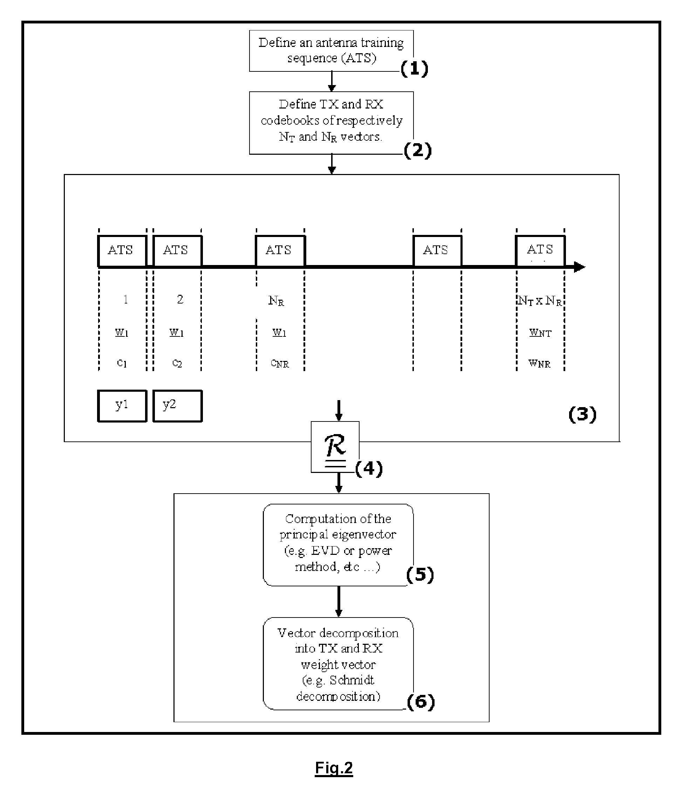

An overview of the estimation process is illustrated in Fig.2. First, a training sequence is defined (1). This training sequence can be defined by the standard used or may be an optimized sequence of symbols proposed by the user. Secondly, a so called codebook or matrix $\underline{D}$ is defined (2), comprising coefficients representing predetermined jointly transmit and receive beamforming coefficients for each of the antenna training periods. Thirdly, the training sequence is transmitted for each antenna training period $m$ with a predetermined coefficient (representing a transmit and a receive weight) selected from the codebook (3). Finally, an estimate of $\underline{\underline{\mathcal{R}}}$ (4) is computed (eq. 26). In a following step, the receive and transmit weight coefficients can be retrieved by computing the principal eigenvector of $\underline{\underline{\mathcal{R}}}$ (5), followed by a vector decomposition (6).

Simulation results

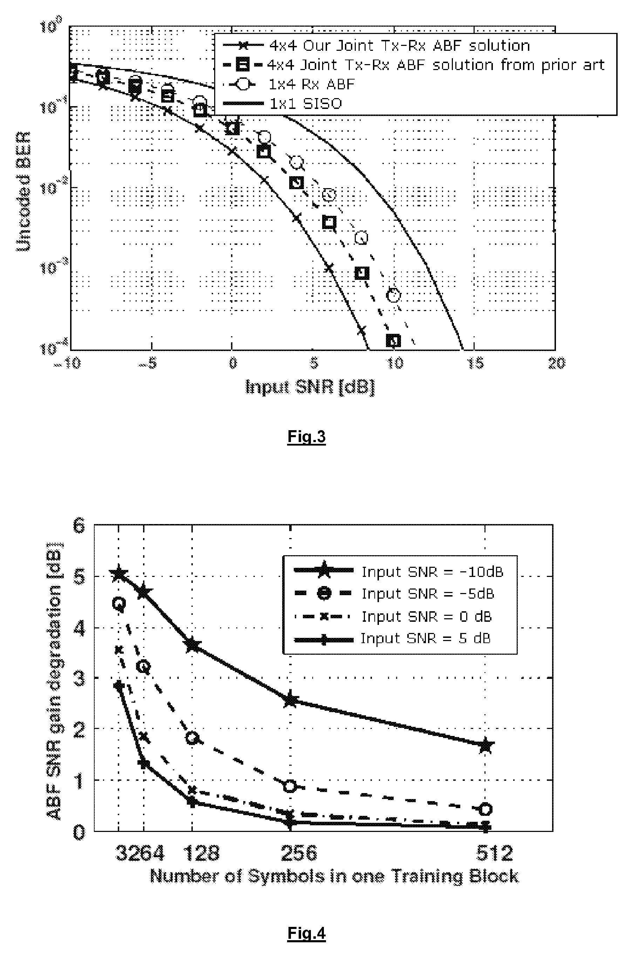

First the channel model used in the simulations is described. A 60 GHz multi-antenna ABF transceiver is considered operating in an indoor environment. Each Tx/Rx pair CIR is generated using the CM23 model proposed by the IEEE 802.15.3c standardization body. Afterwards, the resulting MIMO channel is normalized such that the average received power is unitary. Firstly, the BER performances of the proposed joint Tx/Rx ABF algorithm are evaluated on a 4x4 MIMO transceiver with a Single Carrier (SC) QPSK - Frequency Domain Equalizer (FDE) air interface. The results are shown in Fig.3. It is observed that the scheme according to the invention (x-marked solid line) yields an ABF gain of 6 dB over a SISO system (solid line). Moreover, by applying a joint Tx/Rx ABF, the BER performance is improved by 3 dB over the scheme where ABF is only applied at the Rx (dashdot line with circle). Secondly, the performance of the proposed CSI estimator is evaluated by computing the degradation of the average ABF SNR at the input of the equalizer relative to the SNR with perfect CSI knoweldge. The degradation is evaluated as a function of the training block length. The results are presented in Fig.4. With a block of 512 symbols, the degradation is less than 1 dB, even at very low input SNR (-10 dB). As the block length decreases, the degradation increases due to errors introduced by the approximation in (28). On the other hand, as the input SNR increases, the performance of the estimator improves and the ABF SNR degradation is less than 0.1 dB with a 256-block length for an average SNR of - 10 dB.

**Claims**

1.  A method of analog beamforming in a wireless communication system having a plurality of transmit antennas and receive antennas, comprising the steps of determining transmit beamforming coefficients and receive beamforming coefficients by

    - determining information representative of communication channels formed between a transmit antenna and a receive antenna of said plurality of antennas,
    - defining a set of coefficients representing jointly said transmit and said receive beamforming coefficients,
    - determining a beamforming cost function using said information and said set of coefficients,
    - computing an optimized set of coefficients by exploiting said beamforming cost function,
    - separating said optimized set of coefficients into optimized transmit beamforming coefficients and optimized receive beamforming coefficients.

2.  Method of analog beamforming in a wireless communication system as in claim 1 whereby said step of determining information representative of communication channels comprises determining a channel pair matrix having elements representative of channel pair formed between a transmit antenna and a receive antenna of said plurality of antennas.

3.  Method of analog beamforming in a wireless communication system as in claim 2 whereby said channel pair matrix is defined by

$$\underline{\underline{\mathcal{R}}} = \sum_{l=0}^{L\text{-}1} vec(\underline{\underline{H}}[l])[vec(\underline{\underline{H}}[l])]^{H}$$

    wherein $L$ denotes the number of dicrete-time multipath components, $\underline{\underline{H}}[l]$ represents the MIMO channel response after a time delay equal to $l$ symbol periods and $[.]^{H}$ stands for the complex conjugate transpose operator.

4.  Method of analog beamforming in a wireless communication system as in any of the previous claims whereby said step of defining a set of coefficients representing jointly said transmit and receive beamforming coefficients comprises defining a joint transmit and receive vector, defined by $\underline{d}^{H} = \underline{w}^{T} \otimes \underline{c}^{H}$., wherein $\underline{w}$ denote the transmit beamforming coefficients and $\underline{c}$ the receive beamforming coefficients.

5.  Method of analog beamforming in a wireless communication system as in any of the previous claims whereby said step of separating said optimized set of coefficients is performed by a vector decomposition.

6.  Method of analog beamforming in a wireless communication system as in any of the previous claims, further comprising the steps of :

    - selecting a set of coefficients representing predetermined transmit and receive beamforming coefficients for a number of antenna training periods,
    - transmitting a periodic training sequence with a predetermined coefficient in said number of antenna training periods, said predetermined coefficient being selected from said set of coefficients,
    - receiving said training sequences,
    - determining dependency relations between said received training sequences at each of said antenna training periods,
- determining an estimate of said information representative of communication channels by means of said dependency relations and said set of coefficients,

7. Method of analog beamforming in a wireless communication system as in claim 6 whereby said number of antenna training periods is defined by the multiplication of the number of receive antennas and the number of transmit antennas.

8. Method of analog beamforming in a wireless communication system as in claims 6 or 7, whereby said dependency relations are organized in a covariance matrix comprising the covariance between said received training sequences at each of said antenna training periods.

9. Method of analog beamforming in a wireless communication system as in claims 6 to 8, whereby said set of coefficients is organized in a joint matrix comprising columns of a used joint transmit and receive vector in each of said antenna training periods and whereby said joint matrix is a unitary matrix.

**Fig.1**

Define an antenna training
sequence (ATS) **(1)**

Define TX and RX
codebooks of respectively
$N_T$ and $N_R$ vectors. **(2)**

| ATS | ATS | ATS | | ATS | | ATS |

| 1 | 2 | $N_R$ | | | | $N_T \times N_R$ |

| $\underline{w}_1$ | $\underline{w}_1$ | $\underline{w}_1$ | | | | $\underline{w}_{NT}$ |

| $c_1$ | $c_2$ | $c_{NR}$ | | | | $w_{NR}$ |

y1   y2

**(3)**

$$\underline{\underline{\mathcal{R}}}$$ **(4)**

Computation of the
principal eigenvector
(e.g. EVD or power
method, etc ...) **(5)**

Vector decomposition
into TX and RX
weight vector
(e.g. Schmidt
decomposition) **(6)**

**Fig.2**

**Fig.3**

**Fig.4**

Europäisches
Patentamt

European
Patent Office

Office européen
des brevets

## EUROPEAN SEARCH REPORT

Application Number

EP 09 16 0177

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | HUY HOANG PHAM ET AL: "MIMO Beamforming for High-Bit-Rate Transmission Over Frequency-Selective Fading Channels" SPREAD SPECTRUM TECHNIQUES AND APPLICATIONS, 2004 IEEE EIGHTH INTERNATIONAL SYMPOSIUM ON SYDNEY, AUSTRALIA 30 AUG.-2 SEPT. 2004, PISCATAWAY, NJ, USA,IEEE, 30 August 2004 (2004-08-30), pages 275-279, XP010754950 ISBN: 978-0-7803-8408-8 * the whole document * ----- | 1-9 | INV. H04B7/06 H04B7/08 |
| A | WO 2004/112279 A (DOCOMO COMM LAB EUROPE GMBH [DE]; DENNO SATOSHI [DE]) 23 December 2004 (2004-12-23) * figures 4,14 * * page 18 - page 23 * ----- | 1-9 | |
| A | OHIRA T: "Analog smart antennas: an overview" PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, vol. 4, 15 September 2002 (2002-09-15), pages 1502-1506, XP010611516 ISBN: 978-0-7803-7589-5 * the whole document * ----- | 1-9 | TECHNICAL FIELDS SEARCHED (IPC) H04B |
| A | WO 2006/070270 A (NOKIA CORP [FI]; RAGHOTHAMAN BALAJI [US]; ZHANG JIANZHONG [US]; WANG Y) 6 July 2006 (2006-07-06) * paragraph [0020] - paragraph [0036] * ----- | 1-9 | |
| A | US 2006/013327 A1 (SUGAR GARY L [US] ET AL) 19 January 2006 (2006-01-19) * paragraph [0021] - paragraph [0055] * ----- | 1-9 | |

The present search report has been drawn up for all claims

| Place of search | Date of completion of the search | Examiner |
|---|---|---|
| Munich | 17 December 2009 | Cabañas Prieto, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 16 0177

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2009

| Patent document cited in search report | | Publication date | Patent family member(s) | | Publication date |
|---|---|---|---|---|---|
| WO 2004112279 | A | 23-12-2004 | AU<br>DE<br>JP | 2003245945 A1<br>60308913 T2<br>2006527507 T | 04-01-2005<br>06-09-2007<br>30-11-2006 |
| WO 2006070270 | A | 06-07-2006 | EP<br>US | 1834421 A1<br>2006146953 A1 | 19-09-2007<br>06-07-2006 |
| US 2006013327 | A1 | 19-01-2006 | US | 2009239486 A1 | 24-09-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20080204319 A

**Non-patent literature cited in the description**

• **H. Hoang Pham et al.** *IEEE Eighth Int'l Symposium on Spread Spectrum Techniques and Applications,* 2004, 275-279